# DEMANDE DE BREVET EUROPEEN

(11) **EP 2 163 959 A1**
(43) Date de publication de la demande: **17.03.2010**
(21) Numéro de dépôt: 08164388.4
(22) Date de dépôt: 16.09.2008
(51) Int. Cl.: G05B 19/401, B23Q 17/22

(54) **Procédé de calibration du positionnement du point de travail d'un outil sur une machine-outil**

(71) Demandeur: Tornos SA, 2740 Moutier (CH)
(72) Inventeur: Paroz, Cédric, 2732 Saicourt (CH)
(74) Mandataire: BOVARD AG

(57) **Abrégé**

L'invention concerne un procédé de positionnement d'outils (4) sur une machine-outil (1) équipée d'au moins un outil (4) qui permet de modifier des formes et dimensions d'un élément (2) à usiner, en vue d'obtenir au moins une pièce (3) dont les formes et dimensions ont été prédéterminées, l'outil (4) comportant une partie active (40), telle une partie active (40) qui peut produire une action de découpe, la machine-outil (1) comprenant un dispositif qui, dit premier dispositif (5), est destiné à porter l'outil (4) d'une manière amovible et permet d'imposer à cet outil (4) des déplacements (50) de valeurs prédéterminées dans un référentiel prédéterminé, dit premier référentiel (10), associé à ladite machine-outil (1).

## Description

L'invention se rapporte à un procédé de positionnement d'outils sur une machine-outil.

L'invention se rapporte également aux moyens pour la mise en oeuvre de ce procédé ainsi qu'aux machines-outils qui les comprennent.

Par outil, on désigne plus particulièrement, mais non exclusivement un outil qui permet, par enlèvement de matière, de modifier les formes et les dimensions d'un élément à usiner, en vue d'obtenir une pièce aux dimensions prédéterminées.

L'outil est donc un outil permettant l'usinage par enlèvement de matière, c'est-à-dire un outil comportant une partie active qui peut produire une action de découpe de matériau, par exemple métallique.

Le procédé selon l'invention trouve une application particulièrement avantageuse dans le domaine des machines-outils d'usinage par tournage ou par décolletage.

Par procédé de positionnement d'outils sur une machine-outil, on désigne un procédé qui permet le positionnement d'outils sur une machine-outil dans laquelle au moins un outil doit être déplacé relativement à au moins un élément à usiner, et ce, dans au moins un premier référentiel, afin de réaliser au moins une opération d'usinage sur cet élément à usiner, cette opération d'usinage étant définie dans ce premier référentiel.

Le fait que le déplacement soit dit "relatif' signifie que l'outil et/ou l'élément à usiner sont déplacés dans le premier référentiel l'un par rapport à l'autre.

L'expression "cette opération étant définie dans ce premier référentiel" signifie que, l'élément à usiner ayant une position prédéterminée dans le premier référentiel, les dimensions de la pièce à obtenir étant également prédéterminées, elles servent à définir différentes positions de la partie active de l'outil dans le premier référentiel, en vue de l'usinage de l'élément à usiner.

En général, chaque outil est associé à ce dispositif, dit premier dispositif, permettant de déplacer l'outil dans le premier référentiel, afin que la partie active de cet outil puisse être amenée dans les différentes positions requises par l'usinage.

Notamment avec les machines-outils automatisées, telles les machines à commande numérique, les déplacements de chaque outil sont préétablis et programmés en fonction :
- d'une part, des dimensions de la pièce à obtenir après que ces dimensions aient été rapportées dans le premier référentiel, et
- d'autre part, de la position de la partie active de l'outil dans ledit premier référentiel.

Lors de la production de pièces en série, les parties actives des outils s'usent et, pour garantir l'obtention des dimensions des pièces, notamment le respect de tolérances de fabrication (côtes et état de surfaces), il faut, par exemple, périodiquement, remplacer les parties actives usagées par des parties actives neuves.

En général, on ne remplace pas la partie active usagée d'un outil fixé sur la machine-outil, mais on remplace chaque outil à la partie active usagée par un outil dont la partie active est neuve, ce qui facilite considérablement l'opération de remplacement.

Qu'il s'agisse de fixer un outil pour la première fois sur le premier dispositif ou de remplacer un outil à la partie active usagée qui est déjà situé sur ledit premier dispositif, il est nécessaire de rapporter physiquement cet outil sur ce premier dispositif et de le fixer à celui ci.

Quelque soit le soin pris pour réaliser cette opération et la qualité du matériel utilisé pour fixer l'outil sur le premier dispositif, il n'est pas possible de garantir que la partie active de l'outil sera toujours placée exactement dans une même position dans le premier référentiel.

En résumé et en d'autres termes, la position de l'outil dans le premier référentiel est approximative et avec une machine-outil automatisée, on ne peut garantir que le premier dispositif déplacera l'outil jusqu'à une position prédéterminée pour réaliser une opération d'usinage.

Un résultat que l'invention vise à obtenir est un procédé de positionnement d'outils qui remédie à cet inconvénient.

A cet effet l'invention a pour objet un procédé selon la revendication 1.

L'invention a également pour objet les moyens pour la mise en oeuvre de ce procédé ainsi que les machines-outils qui les comprennent.

L'invention sera bien comprise à la lecture de la description ci-après faite à titre d'exemple non limitatif en regard du dessin ci-annexé qui représente schématiquement :

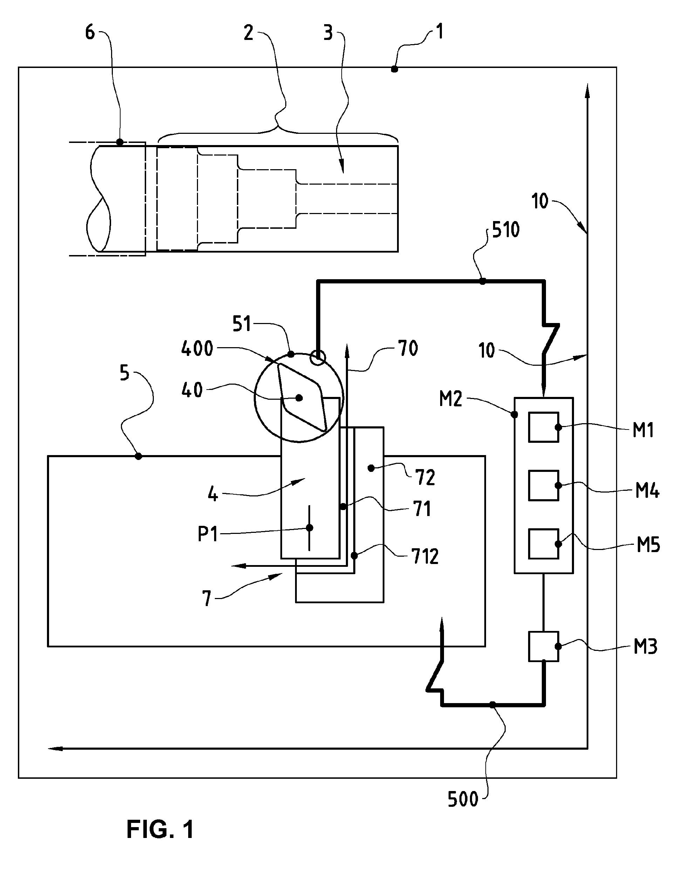

- figure 1 : vue de dessus, une machine-outil équipée de moyens pour la mise en oeuvre du procédé selon l'invention,

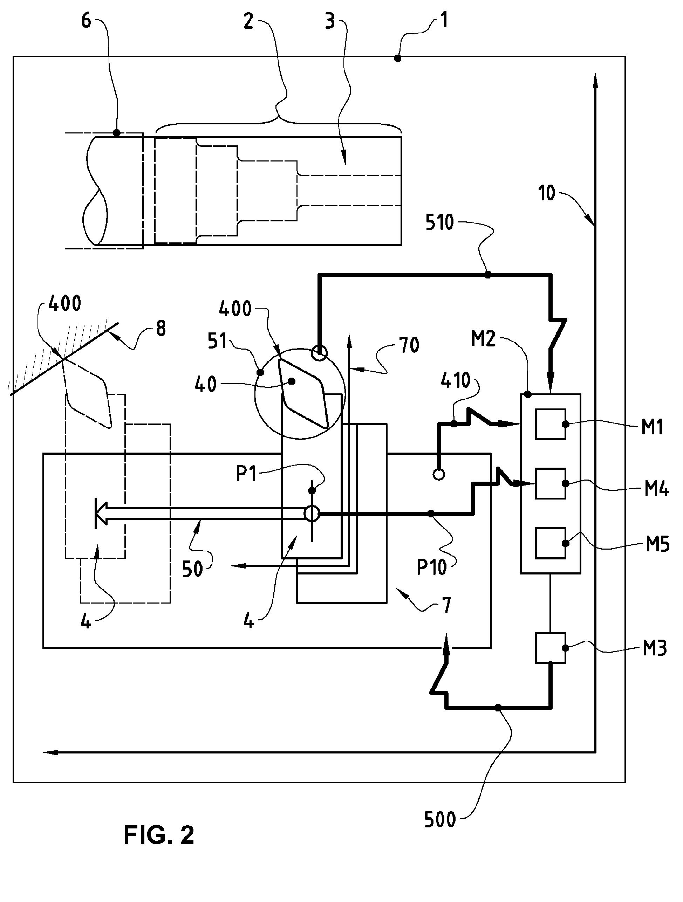

- figure 2 : également vue de dessus, la machine-outil de la figure 1, lors d'une étape déterminante du procédé.

En se reportant au dessin, on voit une machine-outil 1 permettant l'usinage d'éléments 2 en vue de réaliser des pièces 3 dont les formes et les dimensions sont prédéterminées.

La machine-outil 1 est équipée d'au moins un outil d'usinage, dit outil 4, c'est-à-dire d'un outil 4 qui permet de modifier des formes et des dimensions d'un élément 2 à usiner, en vue d'obtenir au moins une pièce 3 dont les formes et les dimensions ont été prédéterminées et doivent être obtenues avec une précision également prédéterminée (classiquement, des tolérances de dimensions et d'état de surface).

L'outil 4 est un outil 4 permettant l'usinage par enlèvement de matière, c'est-à-dire un outil 4 comportant une partie active 40, telle une partie active 40 qui peut produire une action de découpe.

L'usinage par enlèvement de matière est une action de découpe de matière qui est produite par action de la partie active 40 de l'outil 4 sur l'élément 2 à usiner, lors d'au moins un déplacement relatif, dit déplacement 50, entre ledit élément 2 à usiner et l'outil 4.

A cet effet, la machine-outil 1 comprend un dispositif qui, dit premier dispositif 5, est destiné à porter l'outil 4 d'une manière amovible et permet d'imposer à cet outil 4 des déplacements 50 de valeurs prédéterminées dans un référentiel prédéterminé, dit premier référentiel 10 associé à ladite machine-outil 1.

En général, une machine-outil met en oeuvre une pluralité d'outils 4, mais, pour simplifier la compréhension, il n'est ici fait référence qu'à un seul outil 4.

De manière classique, le premier dispositif 5 permet de dépacer chaque outil 4 depuis une situation, dite situation de repos, dans laquelle il maintient l'outil éloigné de l'élément 2, et au moins une autre situation, dite situation de travail, dans laquelle il amène ledit outil 4 au contact dudit élément 2.

Le premier référentiel 10 est par exemple un référentiel à trois axes orthogonaux, tels des axes orientés dans des directions de déplacement possibles d'un outil 4 au moyen du premier dispositif 5.

Aucun repère n'est associé aux axes et seul le référentiel est asocié à un repère.

Egalement, seuls deux des axes du premier référentiel 10 qui sont situés dans le plan de chaque figure ont été représentés.

Par exemple, de manière classique, les déplacements 50, c'est-à-dire notamment les paramètres de dimension, de vitesse et d'accélération de ces déplacements, sont prédéterminés par calcul, d'une part, en fonction des formes et dimensions à donner à la pièce 3 et, d'autre part, des formes et dimensions de l'élément 2 qu'il faut usiner.

La machine-outil 1 comprend classiquement un calculateur (non représenté) qui traite, d'une part, des informations internes à cette machine-outil 1, telles des informations relatives aux déplacements 50 de l'outil 4 et, d'autre part, des informations venant de l'extérieur de la machine-outil 1, telles des informations relatives à la pièce 3 à usiner.

Le procédé selon l'invention trouve une application particulièrement avantageuse dans le domaine des machines-outils 1 pour l'usinage par tournage ou par décolletage.

Sur ce type de machine-outil 1, l'élément 2 à usiner est quand à lui fixé à la machine-outil 1, et dans l'exemple dessiné, il est retenu par une partie tournante 6 de la machine-outil 1, telle une pince de serrage portée par une broche rotative (cas d'une machine-outil de décolletage).

L'élément 2 à usiner peut donc être constitué par une extrémité d'une barre de matériau, tel que cela est le cas dans une machine-outil 1 pour l'usinage par décolletage.

Quoiqu'il en soit lors de l'usinage, particulièrement lors de l'usinage en série, la partie active 40 de chaque outil 4 s'use et, pour garantir l'obtention des dimensions des pièces 3, notamment, le respect de tolérances de fabrication (côtes dimensionnelles et rugosité de surfaces), il est nécessaire de remplacer régulièrement chaque outil 4 ayant une partie active 40 qui est usagée, par un outil 4 comportant une partie active 40 qui est neuve, ou présente les caractéristiques d'une partie active 40 qui est neuve.

En général, on remplace chaque outil 4 dont la partie active 40 est usagée par un outil 4 dont la partie active 40 est "neuve", ce qui facilite considérablement l'opération de remplacement.

A défaut de remplacement, la rugosité des surfaces obtenues par usinage au moyen de l'outil 4 dont la partie active 40 est usagée se dégrade autant de la précision dimensionnelle de ces surfaces.

De manière notable :
- au cours d'au moins l'une des opérations que sont un premier montage d'un outil 4 sur le premier dispositif 5 et un remplacement d'un outil 4 sur ce premier dispositif 5, lorsqu'on associe un tel outil 4 audit premier dispositif 5,
   - on rapporte cet outil 4 sur le premier dispositif 5 en garantissant la situation de sa partie active 40 dans une zone 51 prédéterminée du premier référentiel 10, mais sans rechercher à donner à cette partie active 40 une position dont les coordonnées dans le premier référentiel 10 pourraient être directement exploitées par le premier dispositif 5 pour imposer à l'outil 4 des déplacements 50 nécessaires à la réalisation de l'usinage de l'élément 2 à usiner,
- au moins préalablement à la réalisation d'une opération d'usinage sur un élément 2 à usiner au moyen d'un outil 4 qui a été positionné sur le premier dispositif 5 comme indiqué précédemment,
   - en prenant en compte la position de la zone 51 prédéterminée, on détermine et on mémorise les paramètres de position de la partie active 40 de cet outil 4 dans le premier référentiel 10, et
- au plus tard lors de la réalisation d'une opération d'usinage sur un élément 2 à usiner au moyen de cet outil 4,
   - on prend en compte les paramètres de position de la partie active 40 dudit outil 4 dans le premier référentiel 10, de manière à influencer des déplacements 50 de l'outil 4 dans ledit premier référentiel 10 et obtenir l'usinage souhaité.

Le respect de cette procédure permet de garantir l'obtention du résultat principal auquel vise l'invention, à savoir, une grande précision d'usinage et une répétitivité de cette précision dans les travaux d'usinage dits de série.

L'expression "de manière à influencer des déplacements 50 de l'outil 4" signifie que l'on influence au moins un paramètre de chaque déplacement 50, tel sa valeur, sa vitesse...

L'expression "garantissant la situation de sa partie active 40 dans une zone 51 prédéterminée du premier référentiel 10", signifie que, compte tenu d'erreurs de positionnement qui sont induites lorsqu'on rapporte un outil 4 sur le premier dispositif 5, la partie active 40 de cet outil 4 se trouve obligatoirement positionnée dans une zone 51 ayant :
- d'une part, une étendue qui peut, par exemple avec des instruments de mesure de distances de type conventionnels, être déterminée au moins par essais successifs, et
- d'autre part, une position dans le premier référentiel 10 qui peut également être déterminée, au moins par essais successifs.

Ces informations peuvent être acquises une fois pour toute et mémorisées.

Le processus d'acquisition de ces informations ne fait pas partie du procédé selon l'invention.

D'une certaine manière, avec le procédé selon l'invention, la valeur exacte des erreurs de positionnement d'un outil 4 rapporté sur le premier dispositif 5 importe peu, pourvu que la partie active 40 se trouve positionnée dans une zone 51 du premier référentiel 5 dont l'étendue a été prédéterminée pour contenir la partie active 40 dans le cas des plus grandes valeurs d'erreurs possibles.

Les plus grandes valeurs d'erreurs dépendent de la "manière mécanique" dont l'outil 4 est rapporté et fixé sur le premier dispositif 5.

Par l'expression "manière mécanique", il faut comprendre notamment une fixation par bridage.

L'homme de l'art sait évaluer ou déterminer la plus grande valeur d'erreur de positionnement possible et déterminer les dimensions de la zone 51 dans laquelle ladite partie active 40 peut être considérée comme située.

La zone 51 prédéterminée est, par exemple, une sphère virtuelle dans laquelle la partie active 40 d'un outil 4 se trouve placée et la situation de cette sphère dans le premier référentiel 10 est exactement connue, c'est-à-dire prédéterminée.

Les moyens pour la mise en oeuvre du procédé précité consistent en
- un moyen fonctionnel, dit second moyen fonctionnel M2 pour, au moins préalablement à la réalisation d'une opération d'usinage sur un élément 2 à usiner au moyen d'un outil 4 qui a été positionné sur le premier dispositif 5,
- déterminer et mémoriser les paramètres de position de la partie active 40 de cet outil 4 dans le premier référentiel 10, et
- un autre moyen fonctionnel, dit troisième moyen fonctionnel M3 pour, au plus tard lors de la réalisation d'une opération d'usinage sur un élément 2 à usiner au moyen de cet outil 4,
   - prendre en compte les paramètres de position de la partie active 40 du dit outil 4 dans le premier référentiel 10, de manière à influencer des déplacements 50 de l'outil 4 dans ledit premier référentiel 10 et obtenir l'usinage souhaité.

Sur les figures, une flèche brisée répertoriée 410 à été utilisée pour symboliser l'acquisition et/ou la mémorisation, par le second moyen fonctionnel M2, d'informations de positions de la partie éctive 40 d'un outil 4 après qu'il ait été amené au contact d'une surface de référence 8.

Egalement sur les figures, une flèche brisée répertoriée 500 à été utilisée pour symboliser la commande du premier dispositif 5 par le troisième fonctionnel M3.

De manière remarquable :
- on met en oeuvre un premier dispositif 5 de type qui, à tout instant, permet de connaître la valeur d'un déplacement 50 qu'il impose à un outil 4 dans le premier référentiel 10, et ce, par rapport à une position de référence, dite première position P1, et
- pour déterminer les paramètres de position de la partie active 40 de cet outil 4 dans le premier référentiel 5 associé à la machine-outil 1,
   - on déplace l'outil 4 depuis la première position P1, vers une surface prédéterminée, dite surface de référence 8, et on surveille la survenance d'un contact entre cette surface de référence 8 et au moins un point 400 de la partie active 40 de l'outil 4 considéré, et
   - à partir de ladite première position P1, on déplace l'outil 4 dont on doit déterminer la position de la partie active 40 dans le premier référentiel 10 vers ladite surface de référence 8, et ce, jusqu'à détecter un contact entre cette surface de référence 8 et au moins un point 400 de la partie active 40 de l'outil 4, puis
   - lorsque le contact entre la surface de référence 8 et le point de la partie active 40 de l'outil 4 considéré est détecté, on mémorise la valeur de chaque déplacement 50 effectué dans le premier référentiel 10 par rapport à la première position P1 dans ledit premier référentiel 10.

La position de référence P1 est avantageusement déterminée par la position de l'outil dans la situation de repos plus avant évoquée, c'est-à-dire, la situation dans laquelle le premier dispositif 5 place l'outil 4 lorsqu'il ne doit pas être amené au contact de l'élément 2.

Les moyens pour la mise en oeuvre du procédé précité consistent en:
- un dispositif, dit premier dispositif 5 de type qui, à tout instant, permet de connaître la valeur d'un déplacement 50 qu'il impose à un outil 4 dans le premier référentiel 10, et ce, par rapport à une position de référence, dite première position P1
- un moyen fonctionnel, dit premier moyen fonctionnel M1, de type permettant de détecter un contact avec une surface prédéterminée, dite surface de référence 8, et au moins un point 400 de la partie active 40 de l'outil 4 considéré,
- un moyen fonctionnel, dit quatrième moyen fonctionnel M4 permettant, à partir de ladite première position P1, de commander un déplacement 50 de l'outil 4 dont il faut déterminer la position de la partie active 40 dans le premier référentiel 10 vers ladite surface de référence 8, et ce, jusqu'à ce que le premier moyen fonctionnel M1 détecte un contact entre cette surface de référence 8 et au moins un point 400 de la partie active 40 de l'outil 4, puis
- un moyen fonctionnel, dit cinquième moyen fonctionnel M5 permettant, lorsque le contact entre la surface de référence 8 et le point de la partie active 40 de l'outil 4 considéré est détecté, de mémoriser la valeur de chaque déplacement 50 effectué dans le premier référentiel 10 par rapport à la première position P1 dans ledit premier référentiel 10.

Sur les figures, une flèche brisée répertoriée P10 à été utilisée pour symboliser l'acquisition et/ou la mémorisation, par le quatrième moyen fonctionnel M4, d'informations relatives à la position prédéterminée P1.

Le premier dispositif 5 est avantageusement un dispositif de déplacement de type à commande numérique.

L'homme de l'art est à même de déterminer, sans avoir à faire preuve d'invention, les techniques les plus appropriées pour réaliser les fonctions attribuées aux différents moyens fonctionnels précités et ainsi, constituer ces moyens.

L'homme de l'art comprendra que les parties actives 40 des outils 4 utilisés pour l'usinage de série ayant des formes exactement déterminées, il peut, sans faire preuve d'invention, choisir chaque point 400 de la partie active 40 qui est le plus approprié pour réaliser l'opération de détection précitée.

Le terme surface de référence 8 utilisé ici désigne aussi bien une surface permettant effectivement un appui physique par contact avec une partie active 40 qu'une surface délimitant un rayon de lumière et contre laquelle il n'est pas possible de trouver un appui effectif.

Afin de garantir une grande rapidité lors du remplacement d'un outil 4, il est connu de placer un dispositif interface, dit second dispositif 7, entre l'outil 4 et le premier dispositif 5.

On met donc en oeuvre un dispositif interface, dit second dispositif 7, disposé entre l'outil 4 et le premier dispositif 5, ce second dispositif 7 comprenant deux parties séparables qui, dites première partie 71 et seconde partie 72, comportent des portées complémentaires 712 pour leur assemblage démontable, dont :
- une première partie 71 destinée à être associée à l'outil 4 et sur laquelle on fixe un outil 4 de manière telle que sa partie active 40 soit située dans une position prédéfinie dans un référentiel, dit second référentiel 70 associé à cette première partie 71 et,
- une seconde partie 72 associée au premier dispositif 5 et sur laquelle on fixe la première partie 71 de manière amovible et qu'elle garantisse un positionnement prédéterminé du second référentiel 70 par rapport au premier référentiel 10 associé au premier dispositif 5.

Seuls deux des axes du second référentiel 70 qui sont situés dans le plan de chaque figure ont été représentés.

De manière remarquable :
- lorsqu'on associe chaque outil 4 à la première partie 71 d'un second dispositif 7, on positionne cet outil 4 sur cette première partie 71 de manière prédéfinie dans le second référentiel 70, mais sans relever la position de la partie active 40 de cet outil 4 par rapport audit second référentiel 70,
- lorsqu'on associe la première partie 71 à la seconde partie 72 du second dispositif 7, on positionne ladite première partie 71 de manière prédéfinie, mais encore sans relever la position de la partie active 40 de cet outil 4 par rapport audit second référentiel 70,
- au moins préalablement à la réalisation d'une opération d'usinage sur un élément 2 au moyen d'un outil 4 qui a été, d'une part, positionné sur un second dispositif 7 comme indiqué précédemment et, d'autre part, placé sur la machine-outil 1 au moyen d'un second dispositif 7, on détermine et on mémorise les paramètres de position de la partie active 40 de cet outil 4 dans le premier référentiel 10 associé à la machine-outil 1, et
- au plus tard lors de la réalisation d'une opération d'usinage sur un élément 2 au moyen de cet outil 4, on prend en compte les paramètres de position de la partie active 40 du dit outil 4 dans le premier référentiel 10.

Cette manière de procéder permet :
- de simplifier considérablement l'étape de positionnement de chaque outil 4 sur un second dispositif 7 auquel il doit être associé,
- de garantir que la position de la partie active 40 de chaque outil 4 dans le premier référentiel 10 ne soit pas tributaire, d'une part, de la mesure de la position de la partie active 40 de cet outil 4 dans le second référentiel 70 et, d'autre part, du positionnement sur la machine-outil 1, du second dispositif 7 auquel l'outil 4 a été associé.

D'une première manière notable, pour détecter un contact entre une surface prédéterminé, dite surface de référence 8 et au moins un point 400 d'une partie active 40 d'un outil 4, on procède à la détection du contact avec une surface de référence 8 constituée par de la lumière.

D'une seconde manière notable, pour détecter un contact entre une surface prédéterminée, dite surface de référence 8 et au moins un point 400 d'une partie active 40 d'un outil 4, on procède à la détection du contact avec une surface de référence 8 constituant un obstacle.

De manière remarquable, c'est lorsqu'on associe un outil 4 au premier dispositif 5 de la machine-outil 1, qu'on détermine et qu'on mémorise les paramètres de position de la partie active 40 de cet outil 4 dans le premier référentiel 10 associé à la machine-outil 1.

De manière encore remarquable, c'est juste préalablement à une opération d'usinage avec un outil 4 qu'on détermine et qu'on mémorise les paramètres de position de la partie active 40 de cet outil 4 dans le premier référentiel 10 associé à la machine-outil 1.

## Revendications

1. Procédé de positionnement d'outils (4) sur une machine-outil (1) équipée d'au moins un outil (4) qui permet de modifier des formes et dimensions d'un élément (2) à usiner, en vue d'obtenir au moins une pièce (3) dont les formes et dimensions ont été prédéterminées, l'outil (4) comportant une partie active (40), tel une partie active (40) qui peut produire une action de découpe par action de la partie active (40) de l'outil (4) sur l'élément (2) à usiner, lors d'au moins un déplacement relatif, dit déplacement (50), entre ledit élément (2) à usiner et l'outil (4),
la machine-outil (1) comprenant à cet effet un dispositif qui, dit premier dispositif (5), est destiné à porter l'outil (4) d'une manière amovible et permet d'imposer à cet outil (4) des déplacements (50) de valeurs prédéterminées dans un référentiel prédéterminé, dit premier référentiel (10), associé à ladite machine-outil (1),
ce procédé étant **caractérisé en ce que :**
- au cours d'au moins l'une des opérations que sont un premier montage d'un outil (4) sur le premier dispositif (5) et un remplacement d'un outil (4) sur ce premier dispositif (5), lorsqu'on associe un tel outil (4) audit premier dispositif (5),
. on rapporte cet outil (4) sur le premier dispositif (5) en garantissant la situation de sa partie active (40) dans une zone (51) prédéterminée du premier référentiel (10), mais sans rechercher à donner à cette partie active (40) une position dont les coordonnées dans le premier référentiel (10) pourraient être directement exploitées par le premier dispositif (5) pour imposer à l'outil (4) des déplacements (50) nécessaires à la réalisation de l'usinage de l'élément (2) à usiner,
- au moins préalablement à la réalisation d'une opération d'usinage sur un élément (2) à usiner au moyen d'un outil (4) qui a été positionné sur le premier dispositif (5) comme indiqué précédemment,
. en prenant en compte la position de la zone (51) prédéterminée, on détermine et on mémorise les paramètres de position de la partie active (40) de cet outil (4) dans le premier référentiel (10), et
- au plus tard lors de la réalisation d'une opération d'usinage sur un élément (2) à usiner au moyen de cet outil (4),
. on prend en compte les paramètres de position de la partie active (40) dudit outil (4) dans le premier référentiel (10), de manière à influencer des déplacements (50) de l'outil (4) dans ledit premier référentiel (10) et obtenir l'usinage souhaité.

2. Procédé selon la revendication 1, **caractérisé en ce que :**
- on met en oeuvre un premier dispositif (5) de type qui, à tout instant, permet de connaître la valeur d'un déplacement (50) qu'il impose à un outil (4) dans le premier référentiel (10), et ce, par rapport à une position de référence, dite première position P1, et
- pour déterminer les paramètres de position de la partie active (40) de cet outil (4) dans le premier référentiel (5) associé à la machine-outil (1),
. on déplace l'outil (4) depuis la première position P1, vers une surface prédéterminée, dite surface de référence (8) et on surveille la survenance d'un contact entre cette surface de référence (8) et au moins un point (400) de la partie active (40) de l'outil (4) considéré, et
. à partir de ladite première position P1, on déplace l'outil (4) dont on doit déterminer la position de la partie active (40) dans le premier référentiel (10) vers ladite surface de référence (8), et ce, jusqu'à détecter un contact entre cette surface de référence (8) et au moins un point (400) de la partie active (40) de l'outil (4), puis
. lorsque le contact entre la surface de référence (8) et le point de la partie active (40) de l'outil (4) considéré est détecté, on mémorise la valeur de chaque déplacement (50) effectué dans le premier référentiel (10) par rapport à la première position P1 dans ledit premier référentiel (10).

3. Procédé selon la revendication 1 ou 2 durant lequel on met en oeuvre un dispositif interface, dit second dispositif (7), disposé entre l'outil (4) et le premier dispositif (5), ce second dispositif (7) comprenant deux parties séparables qui, dite première partie (71) et seconde partie (72), comportent des portées complémentaires (712) pour leur assemblage démontable, dont :
. une première partie (71) destinée à être associée à l'outil (4) et sur laquelle on fixe un outil (4) de manière telle que sa partie active (40) soit située dans une position prédéfinie dans un référentiel, dit second référentiel (70) associé à cette première partie (71) et,
. une seconde partie (72) associée au premier dispositif (5) et sur laquelle on fixe la première partie (71) de manière amovible et pour qu'elle garantisse un positionnement prédéterminé du second référentiel (70) par rapport au premier référentiel (10) associé au premier dispositif (5),
ce procédé étant **caractérisé en ce que :**
- lorsqu'on associe chaque outil (4) à la première partie (71) d'un second dispositif (7), on positionne cet outil (4) sur cette première partie (71) de manière prédéfinie dans le second référentiel (70), mais sans relever la position de la partie active (40) de cet outil (4) par rapport audit second référentiel (70),
- lorsqu'on associe la première partie (71) à la seconde partie (72) du second dispositif (7), on positionne ladite première partie (71) de manière prédéfinie, mais encore sans relever la position de la partie active (40) de cet outil (4) par rapport audit second référentiel (70),
- au moins préalablement à la réalisation d'une opération d'usinage sur un élément (2) au moyen d'un outil (4) qui a été, d'une part, positionné sur un second dispositif (7) comme indiqué précédemment et, d'autre part, placé sur la machine-outil (1) au moyen d'un second dispositif (7), on détermine et on mémorise les paramètres de position de la partie active (40) de cet outil (4) dans le premier référentiel (10) associé à la machine-outil (1), et
- au plus tard lors de la réalisation d'une opération d'usinage sur un élément (2) au moyen de cet outil (4), on prend en compte les paramètres de position de la partie active (40) du dit outil (4) dans le premier référentiel (10).

4. Procédé selon l'une des revendications 2 ou 3, **caractérisé en ce que** pour détecter un contact entre une surface prédéterminé, dite surface de référence (8) et au moins un point (400) d'une partie active (40) d'un outil (4), on procède à la détection du contact avec une surface de référence (8) constituée par de la lumière.

5. Procédé selon l'une des revendications 2 ou 3, **caractérisé en ce que** pour détecter un contact entre une surface prédéterminé, dite surface de référence (8), et au moins un point (400) d'une partie active (40) d'un outil (4), on procède à la détection du contact avec une surface de référence (8) constituant un obstacle.

6. Procédé selon l'une quelconque des revendications 1 à 5, **caractérisé en ce que** c'est lorsqu'on associe un outil (4) au premier dispositif (5) de la machine-outil (1), qu'on détermine et qu'on mémorise les paramètres de position de la partie active (40) de cet outil (4) dans le premier référentiel (10) associé à la machine-outil (1).

7. Procédé selon l'une quelconque des revendications 1 à 5, **caractérisé en ce que** c'est juste préalablement à une opération d'usinage avec un outil (4) qu'on détermine et qu'on mémorise les paramètres de position de la partie active (40) de cet outil (4) dans le premier référentiel (10) associé à la machine-outil (1).

8. Moyens pour la mise en oeuvre du procédé selon l'une quelconque des revendications 1 à 7, **caractérisés en ce qu'**ils consistent en :
- un moyen fonctionnel, dit second moyen fonctionnel M2 pour, au moins préalablement à la réalisation d'une opération d'usinage sur un élément (2) à usiner au moyen d'un outil (4) qui a été positionné sur le premier dispositif (5),
. déterminer et mémoriser les paramètres de position de la partie active (40) de cet outil (4) dans le premier référentiel (10), et
- un autre moyen fonctionnel, dit troisième moyen fonctionnel M3 pour, au plus tard lors de la réalisation d'une opération d'usinage sur un élément (2) à usiner au moyen de cet outil (4),
. prendre en compte les paramètres de position de la partie active (40) dudit outil (4) dans le premier référentiel (10), de manière à influencer des déplacements (50) de l'outil (4) dans ledit premier référentiel (10) et obtenir l'usinage souhaité.

9. Moyens pour la mise en oeuvre du procédé selon l'une quelconque des revendications 2 à 7, **caractérisés en ce qu'**ils consistent en:
- un dispositif, dit premier dispositif (5) de type qui, à tout instant, permet de connaître la valeur d'un déplacement (50) qu'il impose à un outil (4) dans le premier référentiel (10), et ce, par rapport à une position de référence, dite première position P1
- un moyen fonctionnel, dit premier moyen fonctionnel M1, de type permettant de détecter un contact entre une surface prédéterminée, dite surface de référence (8), et au moins un point (400) de la partie active (40) de l'outil (4) considéré,
- un moyen fonctionnel, dit quatrième moyen fonctionnel M4 permettant, à partir de ladite première position P1, de commander un déplacement (50) de l'outil (4) dont il faut déterminer la position de la partie active (40) dans le premier référentiel (10) vers ladite surface de référence (8), et ce, jusqu'à ce que le premier moyen fonctionnel M1 détecte un contact entre cette surface de référence (8) et au moins un point (400) de la partie active (40) de l'outil (4), puis
- un moyen fonctionnel, dit cinquième moyen fonctionnel M5 permettant, lorsque le contact entre la surface de référence (8) et le point de la partie active (40) de l'outil (4) considéré est détecté, de mémoriser la valeur de chaque déplacement (50) effectué dans le premier référentiel (10) par rapport à la première position P1 dans ledit premier référentiel (10).

10. Machine-outil **caractérisée en ce qu'**elle est comprend des moyens selon l'une des revendications 8 ou 9.
